# EUROPEAN PATENT APPLICATION

(11) **EP 4 372 944 A1**
(43) Date of publication of application: **22.05.2024**
(21) Application number: 23211321.7
(22) Date of filing: 21.11.2023
(51) Int. Cl.: H02J 3/14, H02J 3/32, H02J 3/38, H02J 13/00

(54) **MODULAR SYSTEM FOR RENEWABLE ENERGY OPTIMIZATION BY PROGRAMMED CONTROL OF ELECTRICAL LOADS BASED ON ESTIMATED SELF-GENERATED ENERGY**

(30) Priority: 21.11.2022 IT 202200004761 U
(71) Applicant: MARE ENGINEERING GROUP S.P.A. IN BREVE MARE GROUP S.P.A., 80038 Pomigliano D'Arco (NA) (IT)
(72) Inventor: NAPPI, Roberto, 80038 POMIGLIANO D'ARCO (NA) (IT)
(74) Representative: Tiburzi, Andrea

(57) **Abstract**

The present invention concerns a system (S) that can be connected to a production plant (I) equipped with passive energy consumption elements (L) and local energy production devices (D) suitable for producing renewable energy, said system (S) comprising a network of actuators (5), each of which is operationally connected to the passive elements (L) and to a control logic unit (U) capable of controlling the energy consumption of said plant (I) on the basis of a forecast estimate of the energy produced from the local devices (D), said control logic unit (U) comprising a first prediction module (1) of the daily production capable of estimating said renewable energy produced, a second prediction module (2) of the daily consumption capable of predicting the energy consumed by the local devices (D) and/or by said one or more passive elements (L), a predictive diagnostic verification module (3) suitable for verifying malfunctions of the local devices (D), and a planning module (4) capable of activating the loads (L) in a selective manner, wherein said network of actuators (5) is capable of selectively supplying said renewable energy produced by said one or more local devices (D) to said one or more passive elements (L ), and said planning module (4) is configured to plan the selective opening of the loads (L) by sending a signal to said network of actuators (5), in such a way as to selectively open or close said loads (L ) at a predetermined instant in time in such a way as to control the energy consumption of said plant (I) on the basis of said prediction of daily production and consumption.

## Description

The present invention concerns a modular system for the optimized management of available renewable energy, in particular, a multilayer system composed of sensors, hardware, firmware, and software for monitoring and optimizing production from renewable energy sources and for monitoring and optimizing energy consumption aimed at maximizing self-consumption of available energy, predictive diagnostics and integrated maintenance of a renewable energy production plant to which the system is connected.

### Field of invention

In more detail, the invention concerns a system of the aforementioned type, designed and realized in particular for the monitoring and optimization of production from renewable energy sources and for the monitoring and optimization of energy consumption of civil and industrial buildings, companies, and energy communities, etc., aimed at maximizing the self-consumption of available energy, but which can be used for the diagnostics and maintenance of energy production systems from renewable sources, for example, solar photovoltaic, solar thermal, wind, biomass, geothermal, hydroelectric, hydrogen, etc...

In the following, the description will be directed at a system for monitoring and optimizing the energy produced by a photovoltaic system but it is clear that it should not be considered limited to this specific use.

### Prior art

As is well known, one of the main renewable energy technologies involves the use of photovoltaic systems. This technology, compared to other applicable renewable energy sources, is a stochastic source of electricity production, being linked to the meteorological conditions of the place where the system is installed. For this reason, photovoltaic production is characterized by an inconsistent trend during the day.

As is also known, systems based on photovoltaic panels have heterogeneous behavior throughout the day, producing energy mainly during the day. In particular, a cloudy day or afternoon, for example, reduces the ability to produce electricity.

As is usual, energy production during daytime hours often exceeds the energy required by the system itself.

It seems clear that a large part of the energy produced by your photovoltaic system, in many cases, is not self-consumed, and can be transferred to the electricity grid through on-site exchange.

It seems clear that this operation forces the system to reduce the direct use of the energy produced by the system itself, making the operation of the system partially inefficient.

Although some buildings equipped with photovoltaic panels or other renewable energy production sources exceed the energy production necessary to meet daily needs, users often do not use all the energy produced, making use of additional energy sources for their needs.

It is clear that this procedure is expensive in terms of cost for individual users and for the unnecessary load on the distribution network.

It is also evident the need to increase the energy self-consumption of a building equipped with energy production devices from renewable sources, i.e. to consume the energy produced within the building itself and avoid transferring it to the grid.

Although it is known, as disclosed in the patent application for industrial invention filed with number no. IT102020000028919 dated 30/11/2020, processing multiple data using advanced analysis techniques, for example, through data fusion, neural networks, artificial intelligence, or machine learning and deep learning techniques, to manage the maintenance cycle, for example, corrective, preventive, predictive, and/or prescriptive, the absence of a system capable of using this processing capacity to efficiently manage the production and use of energy from renewable sources appears evident.

It is also known, as described by the patent application for invention in Italy n. 102020000029471, filed on 02/12/2020, the possibility of monitoring and predictive maintenance of the state of wear of mechanical components. However, such mechanical component monitoring systems are configured and sized for mobile components, and applied in the transportation technical field. Furthermore, they refer to the monitoring and prediction of the wear of these components and, therefore, a system of the type mentioned for the monitoring and management of energy production devices from renewable sources does not appear to be usable, at least efficiently.

For this purpose, for example, a user could concentrate most of their energy consumption during daylight hours, i.e. the moment in which the sun radiates its rays to the maximum on the photovoltaic panels. The viability of this solution appears unlikely as it would require concentrating the use of machines, ovens, and other electrical devices exclusively or mostly during the day.

Another option to increase energy efficiency would require the exclusive use of electrically powered devices. In this case, any excess electricity produced would allow charging an electric car or charge energy storage systems, which allow storing part of the electricity produced by the photovoltaic system and reuse it when needed, so as not to have to withdraw from the external network.

Further types of energy production equipment from renewable sources comprise, as a non-limiting example, wind power plants. Even for the energy produced by these devices, the need to manage production, which is dependent on atmospheric conditions, and consumption more efficiently, is evident.

### Scope of the invention

In light of the above, it is, therefore, scope of the present invention to maximize energy self-consumption on a predictive basis through: the automated management of the switching on and off of electrical loads according to the predicted energy availability, with the aim of consuming all the renewable energy available; the local distribution of this energy to the loads, which can be activated selectively by means of actuators; the reduction of the quantity of energy required coming from the distribution network; the diagnostics and the maintenance of energy production systems from renewable sources.

### Object of the invention

These and other results are obtained according to the invention with a renewable energy optimization system that can be connected to one or more passive energy consumption elements and to one or more local energy production devices capable of producing renewable energy.

It is, therefore, the specific object of the present invention a system comprising a control logic unit capable of controlling the energy consumption of said system on the basis of the forecast estimate of the energy produced.

The system is modular, i.e. it includes a first module for predicting energy production, a second module for predicting the loads to be supported, and a diagnostic verification module to verify the correct functioning of the local devices.

The first daily production prediction module is able to estimate said renewable energy produced by said one or more local devices belonging to a production plant to which the system can be connected.

The second daily consumption prediction module is able to predict the energy consumed by one or more passive elements that can be electrically connected to a production plant and activated by said system.

The predictive diagnostic verification module is able to verify malfunctions of said one or more local devices belonging to the production plant. In this way, the verification module can actively contribute to improving the management of production and consumption of energy.

The system also comprises a network of actuators, each operationally connected in a wired and/or wireless manner to said control logic unit and to said one or more passive elements, wherein said network is capable of selectively supplying said renewable energy produced by said one or more local devices to said one or more passive elements.

The control logic unit is capable of receiving a prediction of the short-term production, for example daily, and/or medium-term production, for example biweekly, from said first module, and a prediction of daily consumption from said second module to control said network of actuators and control the energy consumption of said plant I.

Still according to the invention, it is a system capable of connecting to one or more local devices, where such local devices can comprise panels, photovoltaic films, and/or mini-wind turbines.

Preferably according to the invention, each of said one or more local devices may comprise an inverter capable of connecting to an electrical system of a building to supply energy to said electrical system.

Furthermore, according to the invention the system comprises a load activation planning module configured to plan the selective opening of said loads by sending a signal to said network of actuators, in such a way as to open or close said loads in a predetermined time instant.

Furthermore, the load activation planning module can activate said loads through the wireless actuation of the actuators.

Furthermore, according to the invention, the first daily forecast module can comprise means capable of receiving or determining atmospheric and environmental forecast data, and a programmable apparatus capable of connecting said atmospheric and environmental forecast data and defining an hourly productivity curve based on said atmospheric and environmental forecast data.

Still according to the invention, said second prediction module can comprise a first sub-module for processing current and historical data received from a plurality of sensors arranged in proximity to said one or more local devices and/or said one or more passive elements and a second sub-module capable of determining an hourly energy consumption curve based on processing said data received from said plurality of sensors.

Preferably according to the invention, said control logic unit may be programmed to automatically determine the difference between the forecast data of said daily production and the forecast data of said consumed energy, plan and selectively activate said network of actuators to manage the automatic switching on and off of the passive elements to control the energy consumption of said plant.

Still according to the invention, the network of actuators can be managed by means of a further management module.

Furthermore, according to the invention, the system may manage a plurality of accumulators suitable for accumulating energy produced by said one or more local devices to improve the performance of the system itself, accumulating energy when the local devices produce it in excess, and releasing it to the passive means, when the latter requires more than that produced.

Again according to the invention, the system may comprise a plurality of sensors and/or meters.

Furthermore, according to the invention the verification module can be equipped with monitoring and self-diagnostic instruments. These may include an aerial reconnaissance sub-system to check for malfunctions.

The specific object of the present invention is therefore a system as defined in claim 1.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1 shows a schematic view of a system for optimizing the production and management of energy produced from renewable sources; and
figure 2 shows a schematic view of an optimization system object of the present invention connected to a plurality of energy production devices and to a plurality of loads.

### Detailed description

In this description, the term self-consumption refers to the electricity produced on a site and consumed entirely within said site, without it being sold to third parties. Therefore, the self-consumption of a building equipped with photovoltaic panels, therefore, corresponds to the consumption in the building itself, avoiding transferring said energy to the grid.

In this description, the term thermal fingerprint indicates the measurement of the temperature of a site or machinery of interest using a thermal imager that detects the infrared radiation of the measured objects.

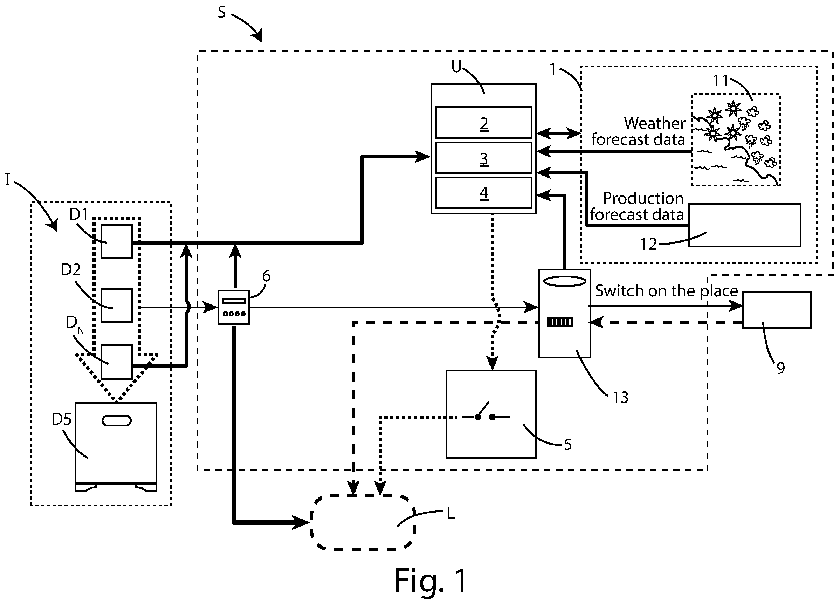

Referring to figure 1, a system S is illustrated, capable of optimizing the energy produced from renewable sources, i.e. managing the energy produced by the system and used by the system itself or by dissipators, for example, passive devices connected to the same system S.

The system S for the optimization of renewable energy can be connected to one or more passive energy consumption elements L and to one or more local energy production devices D suitable for producing renewable energy.

The system S is modular, i.e., it comprises a first prediction module 1, a second prediction module 2, and a verification module 3, suitable for verifying malfunctions of said one or more local devices D.

The system S also comprises a controller U, i.e. a control logic unit U capable of controlling said modules.

The first daily production prediction module 1 is able to estimate the renewable energy produced by said one or more local devices D, while the second daily consumption prediction module 2 is able to predict the energy consumed by the local devices D and/or by the passive elements L, and the diagnostic verification module 3 is suitable for verifying malfunctions of said one or more local devices D.

The system S also comprises a network of actuators 5, each operationally connected to said control logic unit U and to said one or more passive elements L, in which said network of actuators 5 is suitable for selectively supplying said renewable energy produced by said one or more local devices D and one or more passive elements L.

According to some embodiments, the system S can comprise a planning module 4 for the selective activations of the loads L.

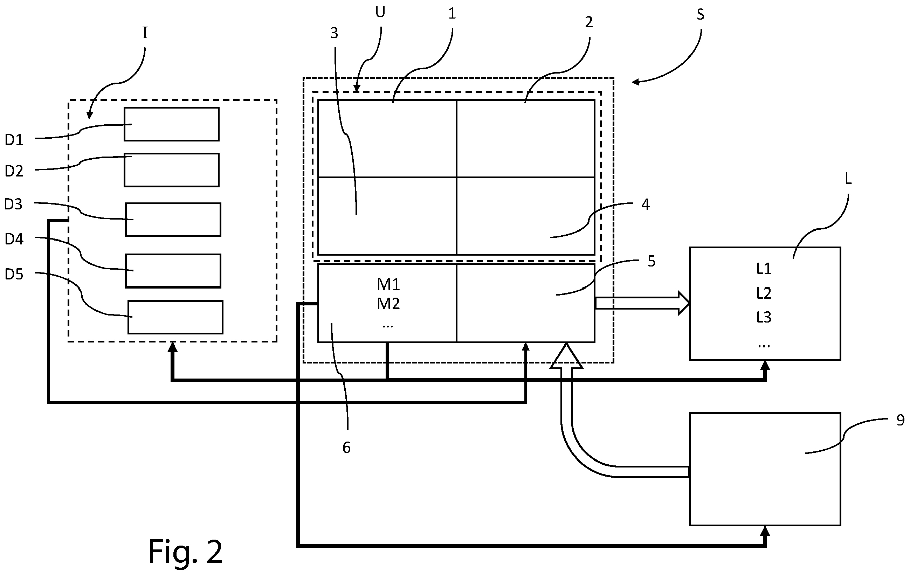

As can be seen from figure 2, the planning module is included in the control logic unit U and is configured to plan the selective opening of said loads L by sending a signal to said network of actuators 5 in such a way as to selectively open or close said loads L at a predetermined time instant. In other words, it is able to plan on which day and at what time to activate a load L. In fact, based on the forecasts, for example, given by the atmospheric conditions on which a photovoltaic system or a wind system depends, the planning module 4 can plan which day and/or what time to activate the load in such a way as to activate it as soon as a minimum or optimal quantity of charge stored or produced has been reached.

The controller U is able to receive a prediction of the daily production from said first module 1 and a prediction of daily consumption from said second module 2 to control said network of actuators 5 and control the energy consumption of said plant I.

Said first module 1 can be based on weather forecast data 11 and/or on production forecast data 12.

Advantageously, the production forecast obtained by combining current or forecasted meteorological data and production data allows the controller U to determine a more precise prediction.

The numerical reference 13 indicates a bidirectional meter capable of reading and/or recording the consumption of the passive elements L and providing a measurement of the excess energy produced by local devices D to be supplied to the distribution network 9.

Therefore, the bidirectional meter 13 can be a "smart grid" type meter and can interact, through an on-site exchange, with an electricity distribution network 9 to manage the electricity network in an intelligent manner. In fact, the verification module 3 can connect to the bidirectional meter 13 to verify malfunctions of said one or more local devices D and/or any faults in the distribution network 9.

According to some embodiments, the modules of said system S can be remotely controlled by a digital control system capable of carrying out, for example, the monitoring of the production department of a company with the aim of increasing the operational efficiency of the production plants and the optimization of maintenance processes.

Furthermore, where implemented, this digital control system allows the organization to be computerized, i.e., it allows data monitored by the system S modules to be saved in a digital archive, and/or to acquire historical or current data from a digital archive.

In some embodiments, the monitoring and self-diagnostic tools include load monitoring and forecasting systems. These tools help maximize the self-consumption of energy obtained from renewable energy sources, for example through photovoltaic devices.

In fact, monitoring a user's consumption allows for estimating daily needs precisely and, consequently, managing energy efficiently.

The modular system S, i.e. comprising modules, described here allows controlling and monitoring both the local devices D₁, D₂,.., Dₙ of energy production from renewable sources, and the consumption of energy available to one or more passive elements L₁, L₂,.., Lₙ, to be able to better organize the energy consumption of the system S, or of a building in which the system S is installed, in a programmed way.

Furthermore, the system S also comprises actuators 5 for selectively controlling its energy consumption.

According to some embodiments, said actuators 5 can be wired and/or wireless, and remotely controlled, regulated by an artificial intelligence and/or predictive analysis algorithm between the energy produced and the energy consumed.

According to some embodiments, the predictive analysis can be carried out according to a supply-demand type scheme, through the difference between the energy produced and the energy consumed.

Furthermore, the efficiency of renewable energy sources can be limited by exogenous causes, for example, breakdowns of local production devices D or any additional components, such as inverters connected to them, or endogenous ones, such as malfunctions of passive elements L, energy dissipators or the like.

Therefore, to compensate for the exogenous and endogenous causes described above, the system S can comprise a diagnostic verification module 3 equipped with monitoring and self-diagnostic tools of said local devices D and/or of said one or more passive elements L, such as to allow integrated management, both ordinary and automated, by means of a preventive and predictive maintenance program of local production devices D and/or passive elements L.

Said maintenance program can be managed by said control logic unit U or by a further external controller, for example through the methodical analysis of performance and of the possible drifts.

Said monitoring and self-diagnostic tools are particularly advantageous for identifying possible sources of malfunction that are difficult to identify, such as, for example, the breakage of any connection strings between photovoltaic panels or inverters D₂ present in the system S and the breakage or collapse of thermal bridges present in the building, in which the System S is installed.

The monitoring and self-diagnostic tools present in some embodiments are suitable for identifying current and future malfunctions of energy production systems.

In some embodiments, said monitoring and self-diagnostic tools involve the use of drones equipped with thermal cameras for precise thermal reconnaissance, aimed at identifying hidden energy losses and faults.

In particular, the system S can be equipped with a plurality of dedicated sensors and/or meters 6, capable of acquiring data useful for predicting malfunction conditions of the systems through remote monitoring, integrating thermal data, and video inspection, acquired by drones and using a predictive calculation and data analysis tool, for the management of integrated maintenance of energy production and distribution plants.

Said plurality of sensors can comprise, for example, light intensity sensors, bending sensors, and/or linear transducers capable of providing a measurement of the variable electric current or voltage starting from the vibration of the transducer.

Said meters may comprise, for example, electrical energy, current flow, and/or power meters.

Said sensors and/or meters 6 allow detecting a thermal fingerprint of the site, identify any thermal bridges for energy dissipation, and a thermal fingerprint of the production plant I equipped with local devices D₁, D₂, .., Dₙ to identify any malfunctions.

In particular, the system S can make use of different types of sensors and/or meters, for example, M₁, M₂,.., Mₙ to detect or predict malfunction conditions of the various devices of a plant I, for example, photovoltaic panels D₁, or wind turbines D₃, hydroelectric devices D₄, or to obtain information on the quantities of energy accumulated in accumulators Ds.

Furthermore, the system S can make use of management software, preferably of the layer type, which implements web-based, on-cloud and/or on remote or virtualized physical server applications. The management system, where included in the system S, is able to be pre-installed and function in the controller U, is able to manage the maintenance cycle, which includes the corrective, preventive, predictive, and prescriptive cycles of at least one, and preferably of all, the local energy production and distribution devices D, i.e. the monitored passive elements L.

In particular, the management of the maintenance cycle can include the cycle that goes from the detection of the anomaly or malfunction to its resolution, the maintenance history, the maintenance schedule, the operating documents, the multimedia contents to support the training activities and maintenance execution.

According to some embodiments, the maintenance cycle management software can comprise tools for augmented reality, immersive reality, mixed reality, metaverse, etc., the management of the automated purchase of materials and spare parts via block-chain, the management of maintenance personnel, management of maintenance instruments and equipment, through business intelligence applications based on storage and management of large data analysis for the automated determination of the performance indices of local energy production devices, and of the process maintenance of the same.

According to some embodiments, this management software can be installed in the firmware of the U controller and cooperate with the software for monitoring and optimizing production from renewable energy sources.

Production optimization can be managed throughout the life of the local devices D or during a predetermined period of time, for example in the medium term from the installation of the system S.

The operation of the system S described above is as follows.

Said modular system S, i.e. equipped with modules, on the basis of short-term weather forecasts, predicts an energy production curve expected, for example, in the following twenty-four hours and, based on the forecasts of the industrial production of the plant, predicts the curve of energy consumption, for example, necessary daily, and calculates the difference between these predictions.

Said differential can be calculated by the control logic unit U, on an hourly basis.

When this differential is determined, said system S activates, selectively, through said actuators 5, the electrical loads in order to align consumption with renewable energy production. In particular, the controller, or control logic unit U, activates said actuators 5, which work as relays, capable of opening or closing the passage of current to said passive elements L, in such a way as to open the passage when said passive elements L require current and to close the passage when said passive elements L are not used.

According to some embodiments, said system S, on the basis of meteorological forecasts, predicts the quantity of solar (photovoltaic) energy produced and, on the basis of forecasts of the industrial production of the plant or of the needs determined within the connected energy communities, predicts the amount of energy consumption required.

Therefore, through appropriate processing of the available data, the control logic unit U selectively activates, in an automated and intelligent manner, through said actuators 5, also called intelligent actuators, the loads in order to align the absorption of the electrical loads to the maximum daily energy production of local production devices D.

In other words, the selective activation by means of the actuators 5 occurs to guarantee a correspondence between the quantity of energy produced and the quantity of energy consumed in the building in which the system S is installed, to maximize energy self-consumption and reduce the electricity exchanged between the installation site and the distribution network.

In some embodiments, for diagnostic-maintenance purposes, the system, using specific sensors, predicts possible malfunction conditions of the systems and local energy connection and distribution networks.

In particular, the system S, with the help of drones, implements thermal diagnostics for video inspection, infrared and visible, to detect current malfunctions of the system, and to predict future fault conditions, through automated processing of the acquired data from a drone, for example using an infrared camera or a visible camera.

The data analysis can be carried out by the same control logic unit U, or by an external controller, capable of receiving the data acquired from said plurality of sensors and/or meters 6 and/or images acquired by the drone and processing them through, for example, data fusion, data analysis, neural networks, artificial intelligence, machine & deep learning, etc..

### Advantages

An advantage of the present invention is to provide a modular and heterogeneous system S, which provides for the optimization of the energy consumption of industrial plants, companies and buildings, and energy communities and the maximization of self-consumption through automated management of the switching on and off of electrical loads and integrated management of the maintenance of energy production plants from renewable sources.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Renewable energy optimization system (S) connectable to a production plant (I) equipped with one or more passive energy consumption elements (L) and one or more local energy production devices (D) suitable for producing renewable energy, said system (S) comprising
a network of actuators (5), each one of which is operationally connected to said one or more passive elements (L) and to a control logic unit (U) capable of controlling the energy consumption of said plant (I) on the basis of an estimated forecast of the energy produced by said one or more local devices (D),
said control logic unit (U) comprising:
- a first prediction module (1) of the daily production capable of estimating said renewable energy produced by said one or more local devices (D);
- a second prediction module (2) of daily consumption capable of predicting the energy consumed by said one or more local devices (D) and/or by said one or more passive elements (L);
- a predictive diagnostic verification module (3) designed to verify malfunctions of said one or more local devices (D); and
- a planning module (4) for selective activation of loads (L) capable of activating loads (L) selectively; said system (S) being **characterized**
**in that** said network of actuators (5) is capable of selectively supplying said renewable energy produced by said one or more local devices (D) to said one or more passive elements (L), and
**in that** said planning module (4) is configured to plan the selective opening of said loads (L) by sending a signal to said network of actuators (5), in such a way as to selectively open or close said loads ( L) at a predetermined time instant in such a way as to control the energy consumption of said plant (I) on the basis of said prediction of daily production from said first module (1) and a prediction of daily consumption from said second module (2).

2. System (S) according to claim 1, wherein said daily first prediction module (1) comprises
means (11) capable of receiving or determining atmospheric and environmental forecast data, and
a programmable apparatus capable of connecting said atmospheric and environmental forecast data and defining an hourly productivity curve based on said atmospheric and environmental forecast data.

3. System (S) according to the preceding claim, wherein said programmable apparatus is programmed with predictive logic to define said productivity curve.

4. System (S) according to any one of the preceding claims, wherein said second prediction module (2) comprises
a sub-module for processing current and historical data received from a plurality of sensors and/or meters (6) arranged in proximity to said one or more local devices (D) and/or said one or more passive elements (L), and
a sub-module capable of determining an hourly energy consumption curve based on a processing of said data received from said plurality of sensors and/or meters (6).

5. System (S) according to any one of the preceding claims, wherein said control logic unit (U) is programmed to:
determine, automatically, the difference between the forecast data of said daily production and the forecast data of said consumed energy; and
selectively activate said network of actuators (5) for the automatic switching on and off of said one or more passive elements (L) to control the energy consumption of said plant (I).

6. System (S) according to any one of the preceding claims, comprising a further management module of said network of actuators (5) to remotely manage said one or more passive elements (L).

7. System (S) according to any one of the preceding claims, comprising a plurality of accumulators (Ds) operationally connectable to said control logic unit (U) and capable of accumulating energy produced by said one or more local devices (D).

8. System (S) according to the preceding claim, comprising a controller capable of directing the energy produced towards said plurality of accumulators (Ds), or directing the charge accumulated by said plurality of accumulators (Ds) towards said one or more passive elements (L) or towards an inverter (D₂) capable of connecting to an electrical system, preferably of a building or manufacturing plant.

9. System (S) according to any one of the preceding claims, wherein said predictive diagnostic verification module (3) is capable of determining, by means of a neural network algorithm, a prediction of the malfunctions of said local devices (D), determining a probability of risk of malfunction in a predetermined period, or sending the probability of the risk to said control logic unit (U) to manage the maintenance of the plant (I).

10. System (S) according to any one of the preceding claims, wherein said diagnostic verification module (3) is equipped with monitoring and self-diagnostic instruments of said local devices (D) and/or of said one or more passive elements (L).

11. System (S) according to the preceding claim, wherein said monitoring and self-diagnostic instruments comprise an aerial reconnaissance subsystem capable of verifying malfunctions of said one or more local devices (D) and/or of said one or more passive elements (L).

12. System (S) according to the preceding claim, wherein said aerial reconnaissance subsystem comprises a drone equipped with a thermal camera.

13. System (S) according to any one of the preceding claims, capable of connecting to one or more local devices (D) for the production of energy from renewable sources including panels (D₁), and/or photovoltaic films (D₁₁), and/or mini-wind turbines (Ds), and/or other renewable energy sources.

14. System (S) according to the preceding claim, wherein the system (S) is capable of connecting to an inverter (D₂) or other means of energy transformation suitable for supplying energy to a building electrical system.
